# EUROPEAN PATENT SPECIFICATION

(11) **EP 3 281 556 B1**
(45) Date of publication and mention of the grant of the patent: **27.02.2019**
(21) Application number: 17185197.5
(22) Date of filing: 07.08.2017
(51) Int. Cl.: A47B 97/04

(54) **BOX FOR THE CONTAINMENT AND THE USE OF ELECTRONIC EQUIPMENT AND RESPECTIVE ACCESSORIES FOR PAINTING AND/OR ARTISTIC DESIGN**
KASTEN ZUR AUFBEWAHRUNG UND VERWENDUNG VON ELEKTRONISCHEN GERÄTEN UND ZUSÄTZLICHEM ZUBEHÖR ZUR MALEREI UND / ODER KÜNSTLICHEN ENTWICKLUNG
BOÎTE POUR LE CONFINEMENT ET L'UTILISATION D'ÉQUIPEMENTS ÉLECTRONIQUES ET D'ACCESSOIRES RESPECTIFS POUR LA PEINTURE ET / OU LA CONCEPTION ARTISTIQUE

(30) Priority: 11.08.2016 IT 201600084721
(43) Date of publication of application: 14.02.2018
(73) Proprietor: Ripensarte S.r.l.s., 20146 Milano (IT)
(72) Inventor: Agostoni, Giovanna, 20123 Milano (IT)
(74) Representative: Borsano, Corrado

(56) References cited:
- CH-A5- 651 689
- CN-U- 205 250 939
- US-A- 5 409 383

## Description

### Scope of the invention

The present invention relates to a box for the containment and the use of electronic equipment and respective accessories for painting and/or artistic design.

### Background art

In the field of accessories for painting and/or artistic design, the use of easel structures is known, i.e. tools provided with legs and a support adapted to support canvases or sheets to make paintings and/or drawings manually with real brushes or pencils.

A box adapted for the containment of writing/painting accessories is known from US 5 409 383 A.

Easel boxes are also known, which comprise foldable and/or telescopic legs, a support for the canvases or sheets, foldable as well, and a box adapted to hold colors, paintbrushes or other drawing accessories, the legs and the support for painting and/or drawing with real brushes or pencils.

Known easel boxes, when not in use, are folded so they take up less space and can be transported easily, like a briefcase, and are therefore particularly useful for example in manual painting outdoors.

Electronic devices are also known, such as tablets or similar devices provided with touch screens and electronic pens/brushes that can be used with such screens and able to allow simulating said painting or drawing with real brushes or pencils.

Tablets or similar devices of a known type, also provided with touch screens are generally used resting on a flat surface, such as on desks, or on special tilting desktop stands.

However, the easel boxes of a known type are not suitable for use with said new electronic devices.

Moreover, the supports currently in use for tablets or similar devices provided with touch screens are not suitable for painting standing or outdoors, being limited to a desktop use.

### Summary of the invention

Therefore, the object of the present invention is to provide a box for the containment and the use of electronic equipment and respective accessories for painting and/or artistic design, aimed at overcoming the above drawbacks.

The present invention relates to a box adapted for the containment and the use of electronic equipment and accessories for painting and/or artistic design, comprising:
- a base comprising a bottom and side walls;
- a cover adapted to be coupled to said base through hinging means at one side of the base, closing means at an opposite side of the base, and means for adjusting the opening angle with respect to the base, said cover being shaped as a frame with side walls and central opening;
- a drawer adapted to be contained by insertion in the base, and adapted to be at least partially extracted from the hinged side of the base, said drawer being adapted to contain said electronic equipment and accessories for painting and/or artistic design;
- a removable flat palette adapted to be inserted in said drawer and removed, said palette when inserted, and with the cover closed, being adapted to retain said electronic equipment and accessories for painting and/or artistic design in a stationary position;
- a first retainer and a second retainer, adapted to slide inside said central opening and to be fixed, in determined variable positions, by fixing means to said side walls of the cover, so as to hold therebetween an electronic device with a screen forming part of said electronic equipment.

In particular, the present invention relates to a box for the containment and the use of electronic equipment and respective accessories for painting and/or artistic design as better described in the claims, which form an integral part of the present description.

### Brief description of the figures

Further objects and advantages of the present invention will appear from the following detailed description of non-limiting embodiment examples thereof, with reference to the accompanying drawings, in which:

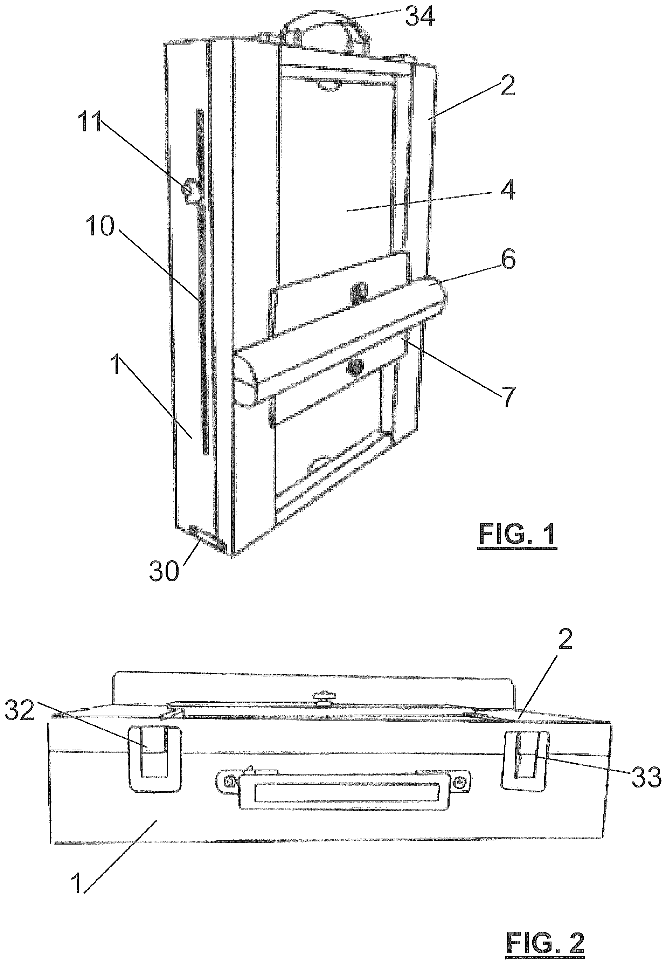

figure 1 shows a first side view of the box object of the present invention when closed;
figure 2 shows a front view of the box when closed;

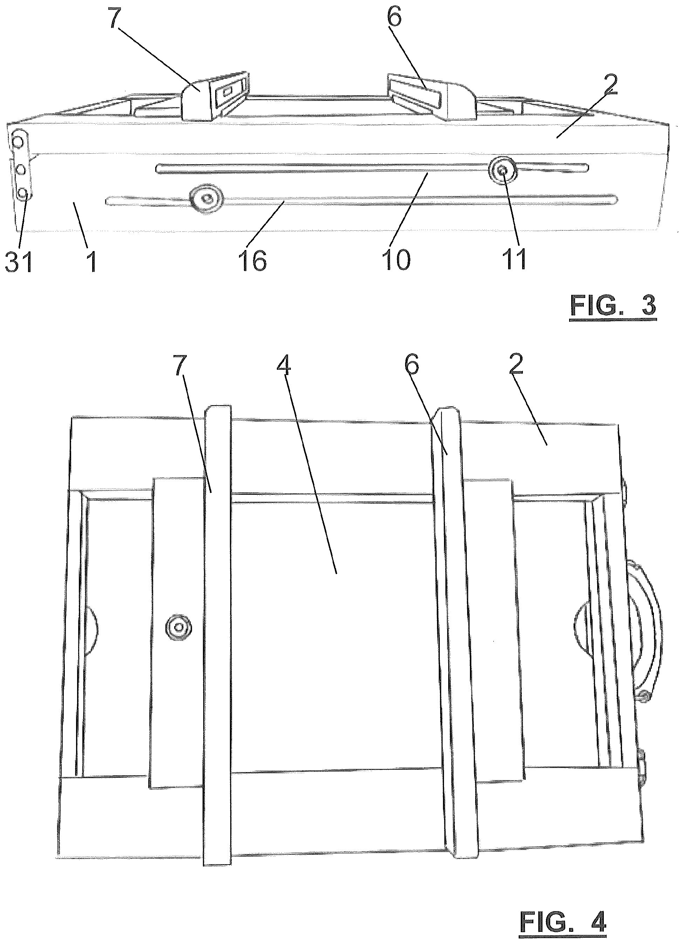

figure 3 shows a second side view of the box when closed;
figure 4 shows a top view, cover side, of the box when closed;
figure 5 shows a top view, cover side, of the box when open with internal cover closed and palette inserted;
figure 6 shows a top view, cover side, of the box when closed with internal cover open;

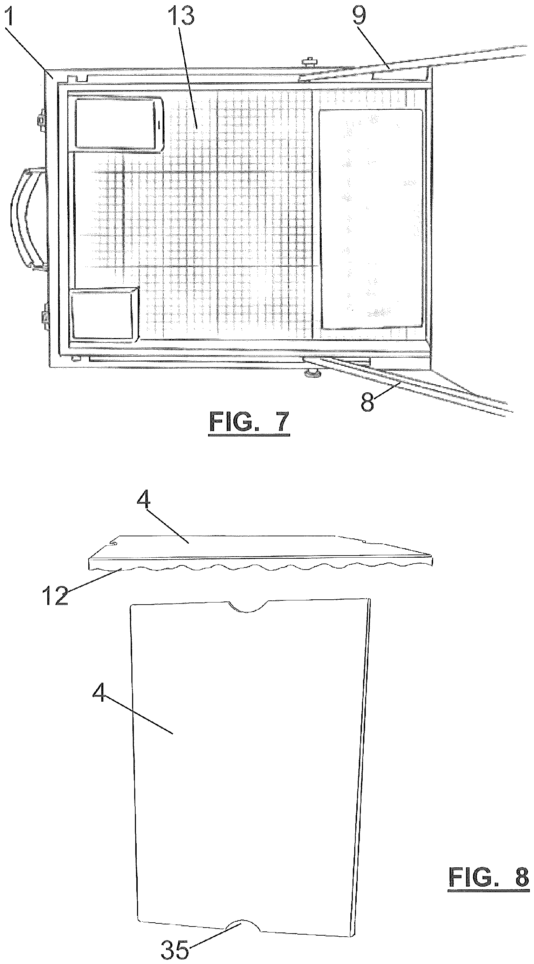

figure 7 shows a partial top view, cover side, of the box when open with internal cover closed, without palette;
figure 8 shows a front view and a side view of the palette;

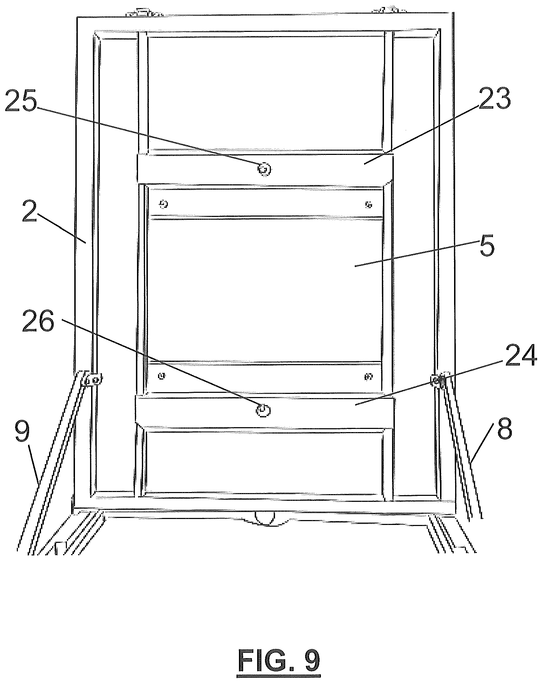

figure 9 shows a rear view of the cover when open, from within the box;
figure 10 shows a side view of the box when open, with open drawer, which shows how a digital device is fixed between the two retainers in the cover, and a keyboard resting on the palette;

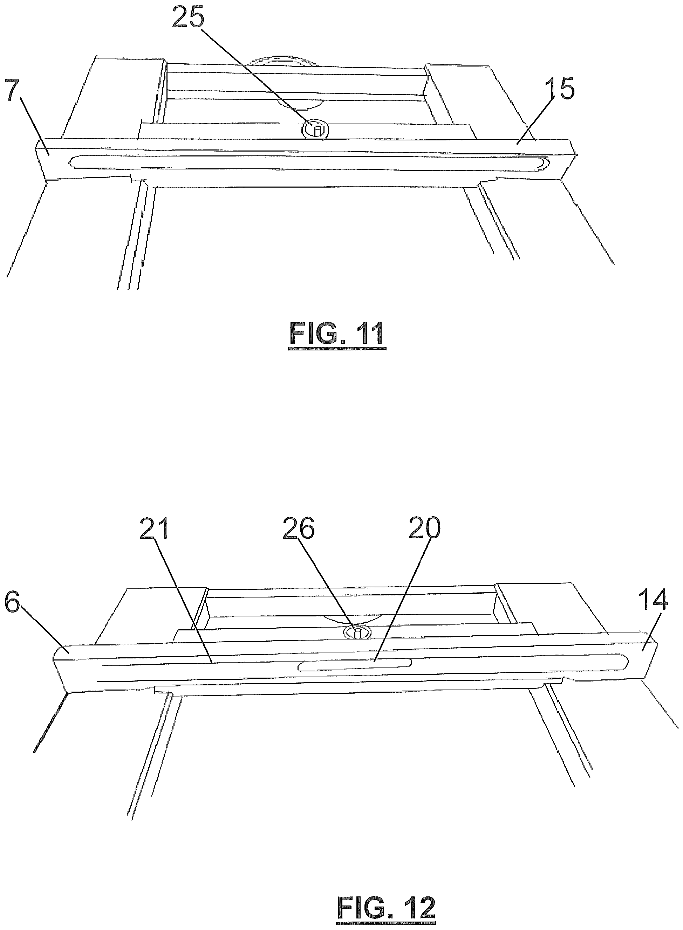

figures 11 and 12 show two partial enlarged views of the cover, from above and from below, respectively, showing the retainers of the digital device, respectively upper and lower;
figure 13 shows a side view of the open box, comprising an easel applied to the base of the box.

The same reference numerals and letters in the figures identify the same elements or components.

### Detailed description of exemplary embodiments

With reference to the figures, the box for the containment and the use of electronic equipment and respective accessories object of the invention essentially comprises the following component parts:
- a base 1 comprising a bottom and side walls;
- a cover 2 adapted to be coupled to the base through hinging means at one side, closing means at an opposite side, and means for adjusting the opening angle with respect to the base;
- a drawer 3 adapted to be contained by insertion in the base, and adapted to be at least partially extracted from the hinged side of the base, the latter having an opening adapted for said insertion and extraction, said drawer being able to contain the electronic equipment and the accessories for painting and/or artistic design;
- a flat and removable palette 4 adapted to be inserted into the drawer and removed.

Cover 2 has a frame structure with four sides and a central opening 5. Within the central opening are inserted two retainers 6, 7, adapted to slide within said opening and to be fixed, in predetermined variable positions, by fixing means to the side walls of the cover.

The two retainers 6, 7 have respective projections 14, 15 projecting with respect to the outer wall of the cover. The two retainers adjustable in position are therefore able to fix an electronic device 18 with a screen therebetween, for example a tablet, holding it at a desired position with respect to the cover, with the screen facing outwards. The edges of the retainers in contact with the edges of the device may have suitable recessed slots which favor the fixing of the device. The shape of the electronic device 18 is generally parallelepiped, and its size can suitably vary in height up to the maximum relative elongation of the two retainers in opening, and in width also beyond the outer dimension of the cover, taking advantage of projections 14, 15. At least one of the two retainers, preferably that on the cover hinging side, is preferably provided with a slot 20, which can serve as a cable tray for the electrical connection of the electronic device 18, and can also be provided with a recess 21 which serves for locking the tablet, so that it does not interfere with the optics of the tablet's camera.

The fixing means of retainers 6, 7 to the cover comprise, in a possible variant, corresponding strips 23, 24 applied on the rear side of the cover as opposed to the respective front part of the retainers and connected to the latter by means of a corresponding button 25, 26 with a screw that can be extended and folded. Moreover, a central thickness is preferably provided inside the opening of the cover, between the respective front parts and strips of the retainers, in order to facilitate the proper sliding and fixing of the retainers. It is clear that the man skilled in the art may implement the fixing means in another manner known in itself, without any problem.

In a possible embodiment of the means for adjusting the opening angle of the cover with respect to the base, at least one of said side walls of the cover is hinged to a terminal of a corresponding arm 8, 9; the other terminal of the arm is slidably connected to a corresponding slot 10 present in the side wall of base 1, by means of a button 11 adapted to slide inside the slot and to be locked therein in a variable position. In this way, cover 2, when open, can be fixed with a variable and adjustable angle with respect to base 1. The presence of both arms (8, 9) on said side walls is preferable to allow for greater stability, but also one arm only on one of the two sides may be sufficient. When the cover is closed, the arms are positioned next to the sides of the base, or in suitable slots in said sides. The arms may be made of metal, or in any case of a rigid material, such as wood.

Drawer 3 has a studded material lining 13, applied on the bottom in the direction towards the cover. The studded material is a self-modelling, flexible material, such as polyurethane or polyester foam, spongy, meaning that it can be shaped under pressure on the objects, and then it changes its shape in compression to fit the contours of the objects and keep them stationary, and returns to the original shape when the objects are removed.

The removable palette 4 is also coated on one side with studded material 12, such as of the type present in the drawer. The palette is preferably inserted into the drawer so as to contrast the studded materials of the drawer and thereof. When the box is closed, cover 2 exerts a suitable pressure on palette 4, in such a way that the two studded materials are shaped on the objects that can be contained therein, exerting a suitable pressure thereon so that they are suitably kept stationary. In addition, when the box is closed, the palette is inserted inside the drawer, locking it.

The objects can be, for example, the electronic device 18 and respective accessory parts, such as power supply, keyboard, mouse, connection cables between the parts, etc.

Moreover, speakers and Bluetooth connections by which it is possible to enjoy multimedia music and video contents or even share with third parties through Internet connections, the painting work, during its execution, and/or the subject that the user wants to paint.

Preferably, in order to obtain a better locking of the drawer, on at least one side of the base there is a second slot 16, in which there is a button 17 adapted to slide within slot 16 and to be locked in a variable position. In this way, the drawer can be locked both in the closed position and in the open position, to the desired degree of partial or total opening.

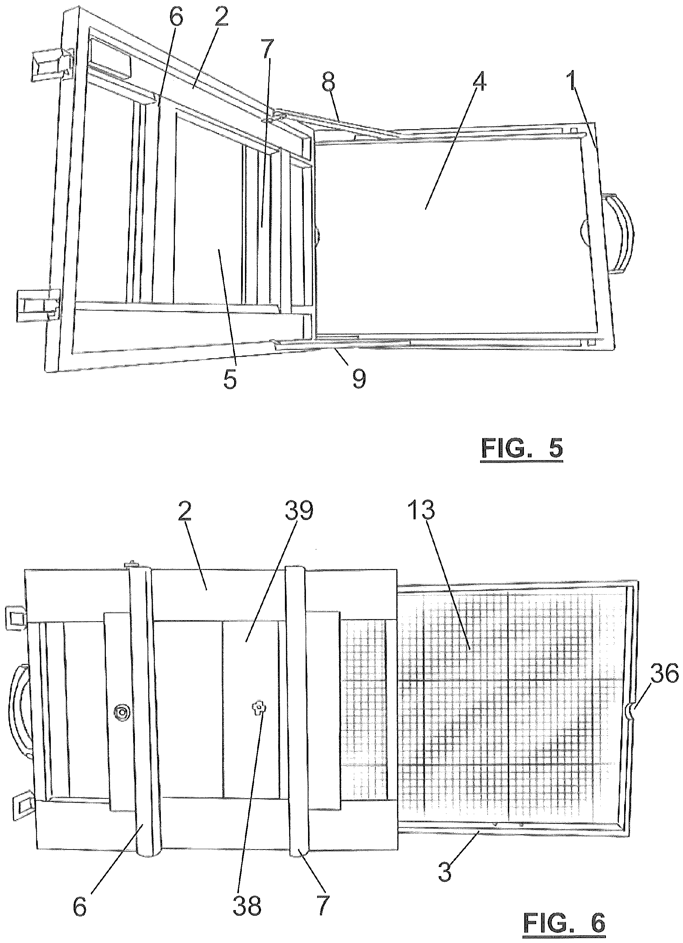

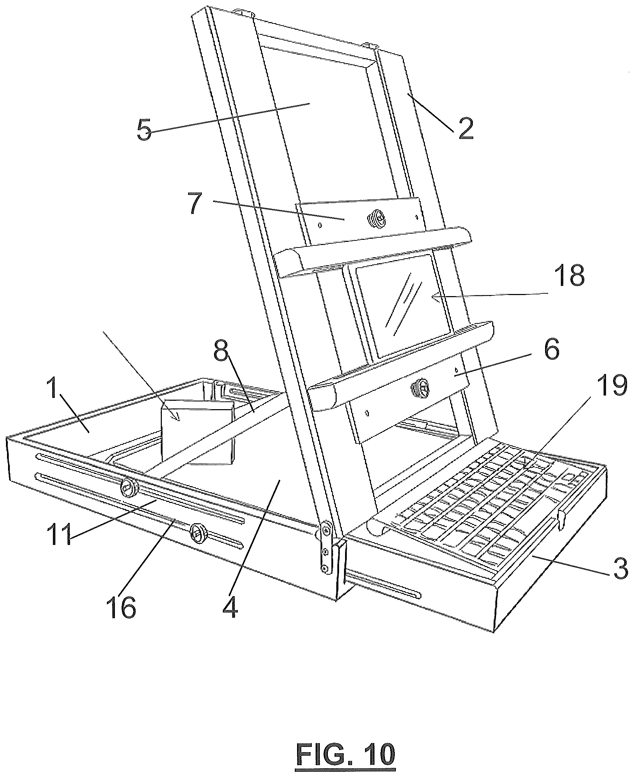

When drawer 3 is open (fig. 6), it is in an underlying position, cantilevered, with respect to the front side of cover 2 (fig. 10). Palette 4 may also be placed on the drawer, both on the flat side and on the studded side; the palette can then serve as a support for working tools, such as keyboard 19 or the mouse of the electronic device (tablet), in an ergonomic manner, in order to avoid having to insert and operate them inside drawer 3, the sides of which would be an obstacle to a proper handling.

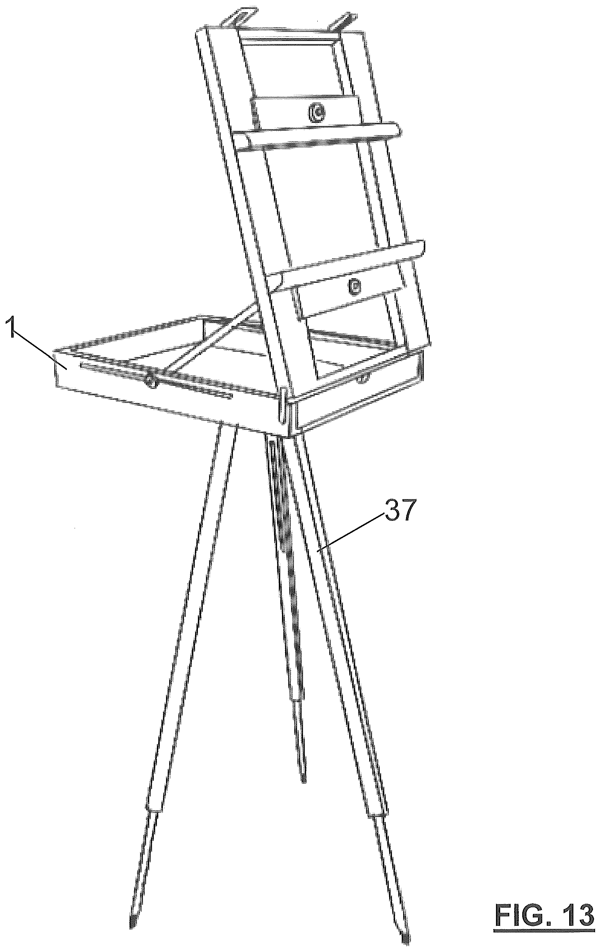

The box may be supported by an easel 37 (fig. 13) of any known type, such as a tripod, adjustable in height.

The easel head is connectable to the bottom of the base, at an appropriate attachment point 38, preferably positioned barycentrically (in the condition of cover open), in the base of the box. It is preferable to make a reinforcement 39 at the attachment point to the bottom of the base, using a suitable thickening of the section of the bottom of the base.

The hinging means of cover 2 to base 1 can be implemented in a manner per se known, such as through two hinges 30, 31 applied to the corresponding angles of the cover and the base, or through a hinge applied to the corresponding sides of the cover and of the base.

The closing means of cover 2 to base 1 can be implemented in a per se known manner, such as through clips 32, 33. It is clear that the man skilled in the art may implement the closing means in another manner known in itself, without any problem.

The box is further provided with a handle 34 on the side of the base which comprises the closing means.

Optionally, between drawer 3 and the bottom of base 2, and interspace may be made for accommodating fine material, such as worksheets.

The drawer is provided with means for the manual opening thereof, such as slots 36 made on the edge of the front side. Palette 4 also has slots 35 on the edges for easy manoeuvrability in position.

The various parts of the box, base, cover, drawer, palette, retainers are made of rigid material, such as wood or other material having suitable appropriate features of strength and lightness, increasing manoeuvrability and portability.

Embodiment variants of the non-limiting example described are possible without departing from the scope of protection of the present invention, comprising all the equivalent embodiments for a man skilled in the art.

The elements and the features shown in the different preferred embodiments may be combined without departing from the scope of protection of the present invention.

The advantages resulting from the application of the present invention are clear. In particular, the box according to the present invention allows safely carrying (in closed configuration) and ergonomically arranging (in open configuration) the above devices for creating a painting, adapting to the different models and to the different sizes of such devices.

The particular arrangement of the component parts thereof facilitates and simplifies the use, both indoors and outdoors. It can in fact be placed on any raised surface, such as a work table or, through the application of the easel, raised from the ground.

The box is also extremely versatile and customizable. In addition to the foregoing, it allows choosing the angle of the cover and thus the position of the electronic device, in particular of the screen as desired, for optimal performance of the painting work.

The following activities are thus much easier and aided:
- Having a "studio" where one can run his own business in the mobile world, having everything available is crucial.
- Using all the material for working ergonomically according to one's needs.
- Having a tool that will last over time that is independent of the different formats and versions of technology manufacturers.
- Being able to work independently during a day without electricity.
- Having all the necessary multimedia services, music, videos, the Internet itself and being able to share experiences.
- Being able to easily carry everything one needs knowing that every sensitive component is well positioned and protected from bumps.

From the above description, the man skilled in the art is able to implement the object of the invention without introducing any further construction details.

## Claims

1. Box adapted for the containment and the use of electronic equipment and accessories for painting and/or artistic design, **characterised in that** it comprises:
- a base (1) comprising a bottom and side walls;
- a cover (2) adapted to be coupled to said base through hinging means (30, 31) at one side of the base, closing means (32, 33) at an opposite side of the base, and means for adjusting the opening angle (8, 9, 10, 11) with respect to the base, said cover being shaped as a frame with side walls and central opening (5);
- a drawer (3) adapted to be contained by insertion in the base, and adapted to be at least partially extracted from the hinged side of the base, said drawer being adapted to contain said electronic equipment and accessories for painting and/or artistic design;
- a removable flat palette (4), adapted to be inserted in said drawer and removed, said palette when inserted, and with the cover closed, being adapted to retain said electronic equipment and accessories for painting and/or artistic design in a stationary position;
- a first retainer (6) and a second retainer (7), adapted to slide inside said central opening (5) and to be fixed, in determined variable positions, by fixing means (23, 24, 25, 26) to said side walls of the cover, so as to hold therebetween an electronic device with a screen forming part of said electronic equipment.

2. Box according to claim 1, wherein said first and second retainer (6, 7) comprise one or more of the following parts:
- respective projections (14, 15) projecting with respect to the outer wall of the cover, so as to hold therebetween said electronic device with a screen;
- said fixing means (23, 24, 25, 26) to said side walls of the cover comprise corresponding strips (23, 24) applied on the rear side of the cover as opposed to a respective front part of said first and second retainer, said strips being connected to said front part by means of a corresponding button (25, 26) with a screw that can be extended and folded;
- a central thickness inside said central opening (5), between the respective front parts and strips of said first and second retainer, in order to facilitate the proper sliding and fixing of the retainers.

3. Box according to claim 1, wherein said means for adjusting the opening angle of the cover with respect to the base comprise at least one of the side walls of the cover, a hinged terminal of a corresponding arm (8, 9), the other terminal of the arm being slidably connected to a corresponding first slot (10) present in a side wall of the base (1), by means of a button (11) adapted to slide inside the slot and to be locked therein in a variable position, so as to obtain said adjustment of the opening angle.

4. Box according to claim 1, wherein:
- said drawer (3) comprises a studded material lining (13), applied on the bottom in the direction towards the cover, said studded material being able to be pressure moulded on said electronic equipment, varying its shape under compression to fit the contours of said equipment;
- said removable palette (4) being covered on one side by studded material (12), so that, when said palette is inserted in the drawer so as to counter the studded material thereof to that of the drawer, ad when said box is closed, said cover (2) exerts pressure on the palette, so as to exert pressure on said equipment, keeping it still.

5. Box according to claim 1, wherein when said box is closed and said palette is inserted in the drawer, the drawer is locked closed.

6. Box according to claim 1, comprising a second slot (16) on a side of said base, and a button (17) adapted to slide inside said second slot, and to be locked therein in a variable position, said button being connected to a side of the drawer facing said side of the base, obtaining a locking of said drawer in a variable position, either closed, or open, to the desired degree of partial or total opening.

7. Box according to claim 1, comprising a point of attachment (38) in the bottom of the base, adapted to connect a stand for holding the box, said point of attachment comprising a reinforcement (39), by thickening of the section of said bottom.

8. Box according to claim 1, wherein said base (1), cover (2), drawer (3), palette (4), first retainer (6) and second retainer (7) are made of wood.

## Patentansprüche

1. Kasten, der für die Aufnahme und die Verwendung einer elektronischen Ausrüstung und von Zubehör zum Malen und/oder zum künstlerischen Gestalten eingerichtet ist, **dadurch gekennzeichnet, dass** der Kasten umfasst:
- einen Sockel (1), der einen Boden und Seitenwände umfasst;
- eine Abdeckung (2), die dazu eingerichtet ist, an einer Seite des Sockels mit dem Sockel über Scharniermittel (30, 31) verbunden zu werden, auf einer gegenüberliegenden Seite des Sockels mit Schließmitteln (32, 33) verbunden zu werden und mit Mitteln zum Einstellen des Öffnungswinkels (8, 9, 10, 11) in Bezug auf den Sockel verbunden zu werden, wobei die Abdeckung als Rahmen mit Seitenwänden und einer zentralen Öffnung (5) ausgebildet ist;
- eine Schublade (3), die dazu eingerichtet ist, durch Einführen in den Sockel darin enthalten zu sein, und dazu eingerichtet ist, aus der Scharnierseite des Sockels zumindest teilweise herausziehbar zu sein, wobei die Schublade dazu eingerichtet ist, die elektronische Ausrüstung und das Zubehör zum Malen und/oder zum künstlerischen Gestalten zu umfassen;
- eine entnehmbare flache Palette (4), die dazu eingerichtet ist, in die Schublade eingesetzt und aus dieser entnommen zu werden, wobei die Palette in einem Zustand, in dem diese eingesetzt ist und die Abdeckung geschlossen ist, dazu eingerichtet ist, die elektronische Ausrüstung und das Zubehör zum Malen und/oder zum künstlerischen Gestalten in einer stationären Position zu halten;
- eine erste Halterung (6) und eine zweite Halterung (7), die dazu eingerichtet sind, in die zentrale Öffnung zu gleiten und in bestimmten variablen Positionen an den Seitenwänden der Abdeckung durch Befestigungsmittel (23, 24, 25, 26) befestigt zu werden, um dazwischen ein elektronisches Gerät mit einem Bildschirm zu halten, das einen Teil der elektronischen Ausrüstung bildet.

2. Kasten nach Anspruch 1, wobei die erste und die zweite Halterung (6, 7) einen oder mehrere der folgenden Teile aufweisen:
- jeweilige Vorsprünge (14, 15), die relativ zu der Außenwand der Abdeckung hervorstehen, um dazwischen das elektronische Gerät mit einem Bildschirm zu halten;
- die Befestigungsmittel (23, 24, 25, 26) an den Seitenwänden der Abdeckung, die korrespondierende Streifen (23, 24) umfassen, die auf der Rückseite der Abdeckung, die entgegengesetzt zu einem jeweiligen vorderen Teil der ersten und der zweiten Halterung angeordnet ist, angebracht sind, wobei die Streifen mit dem vorderen Teil mittels eines korrespondierenden Knopfs (25, 26) mittels einer ein- und ausfahrbaren Schraube verbunden sind;
- eine zentrale Dicke innerhalb der zentralen Öffnung (5) zwischen den jeweiligen vorderen Teilen und den Streifen der ersten und der zweiten Halterung, um ein ordnungsgemäßes Gleiten und Fixieren der Halterungen zu erleichtern.

3. Kasten nach Anspruch 1, wobei die Mittel zum Einstellen des Öffnungswinkels der Abdeckung relativ zu dem Sockel mindestens eine der Seitenwände der Abdeckung, einen klappbaren Anschluss eines korrespondierenden Arms (8, 9) umfassen, wobei der andere Anschluss des Arms gleitend mit einer entsprechenden ersten Öffnung (10) in einer Seitenwand des Sockels (1) mittels eines Knopfes (11) verbunden ist, der dazu eingerichtet ist, innerhalb der Öffnung zu gleiten und darin in einer variablen Position verriegelt zu werden, um den Öffnungswinkel einzustellen.

4. Kasten nach Anspruch 1, wobei:
- die Schublade (3) eine Auskleidung (13) aus einem genopptem Material umfasst, die auf der Unterseite in Richtung der Abdeckung angebracht ist, wobei das genoppte Material dazu geeignet ist, auf die elektronische Ausrüstung druckgeformt zu werden, wobei es seine Form unter Druck ändert, um den Konturen der Ausrüstung zu entsprechen;
- die entnehmbare Palette (4) auf einer Seite mit einem genopptem Material (12) bedeckt ist, so dass, wenn die Palette in die Schublade derart eingesetzt wird, dass dessen genopptes Material dem der Schublade entgegengesetzt ist, und wenn der Kasten geschlossen ist, die Abdeckung (2) Druck auf die Palette ausübt, um Druck auf die Ausrüstung auszuüben und diese zu halten.

5. Kasten nach Anspruch 1, wobei, wenn der Kasten geschlossen ist und die Palette in die Schublade eingesetzt ist, die Schublade geschlossen verriegelt ist.

6. Kasten nach Anspruch 1, umfassend eine zweite Öffnung (16) auf einer Seite des Sockels und einen Knopf (17), der dazu eingerichtet ist, innerhalb der zweiten Öffnung zu gleiten und darin in einer variablen Position verriegelt zu werden, wobei der Knopf mit einer Seite der Schublade verbunden ist, die der Seite des Sockels zugewandt ist, um eine Verriegelung der Schublade in einer variablen Position zu erhalten, entweder in einer geschlossenen Position oder einer bis zu einem gewünschten Grad zwischen einer teilweise geöffneten bis zu einer vollständig geöffneten offenen Position.

7. Kasten nach Anspruch 1, umfassend einen Befestigungspunkt (38) im Boden des Sockels, der dazu eingerichtet ist, eine Halterung zum Halten des Kastens anzuschließen, wobei der Befestigungspunkt eine durch eine Verdickung dieses Abschnitts des Bodens gebildete Verstärkung (39) umfasst.

8. Kasten nach Anspruch 1, wobei der Sockel (1), die Abdeckung (2), die Schublade (3), die Palette (4), die erste Halterung (6) und die zweite Halterung (7) aus Holz bestehen.

## Revendications

1. Boîte adaptée pour contenir et utiliser un équipement électronique et des accessoires de peinture et/ou de conception artistique, **caractérisée en ce qu'**elle comprend :
- une base (1) comprenant des parois de fond et de côté ;
- un couvercle (2) adapté pour être couplé à ladite base par le biais de moyens d'articulation (30, 31) d'un côté de la base, de moyens de fermeture (32, 33) d'un côté opposé de la base, et de moyens pour régler l'angle d'ouverture (8, 9, 10, 11) par rapport à la base, ledit couvercle étant formé comme un cadre avec des parois de côté et une ouverture centrale (5) ;
- un tiroir (3) adapté pour être contenu par insertion dans la base, et adapté pour être extrait au moins partiellement depuis le côté articulé de la base, ledit tiroir étant adapté pour contenir ledit équipement électronique et lesdits accessoires de peinture et/ou de conception artistique ;
- une palette plate amovible (4), adaptée pour être insérée dans ledit tiroir et enlevée, ladite palette lorsqu'elle est insérée, avec le couvercle fermé, étant adaptée pour retenir ledit équipement électronique et lesdits accessoires de peinture et/ou de conception artistique dans une position immobile ;
- un premier élément de retenue (6) et un second élément de retenue (7), adaptés pour coulisser à l'intérieur de ladite ouverture centrale (5) et pour être fixés, dans des positions variables déterminées, par des moyens de fixation (23, 24, 25, 26) auxdites parois de côté du couvercle, de façon à maintenir entre eux un dispositif électronique doté d'un écran faisant partie dudit équipement électronique.

2. Boîte selon la revendication 1, dans laquelle lesdits premier et second éléments de retenue (6, 7) comprennent une ou plusieurs des parties suivantes :
- des saillies (14, 15) respectives faisant saillie par rapport à la paroi externe du couvercle, de façon à maintenir entre elles ledit dispositif électronique doté d'un écran ;
- lesdits moyens de fixation (23, 24, 25, 26) auxdites parois de côté du couvercle comprennent des bandes (23, 24) correspondantes appliquées sur le côté arrière du couvercle opposé à une partie avant respective desdits premier et second éléments de retenue, lesdites bandes étant reliées à ladite partie avant au moyen d'un bouton (25, 26) correspondant avec une vis qui peut être étendue et pliée ;
- une épaisseur centrale à l'intérieur de ladite ouverture centrale (5), entre les parties avant respectives et les bandes desdits premier et second éléments de retenue, afin de faciliter le coulissement et la fixation corrects des éléments de retenue.

3. Boîte selon la revendication 1, dans laquelle lesdits moyens pour régler l'angle d'ouverture du couvercle par rapport à la base comprennent au moins l'une des parois de côté du couvercle, une extrémité terminale articulée d'un bras (8, 9) correspondant, l'autre extrémité terminale du bras étant reliée coulissante à une première fente (10) correspondante présente dans une paroi de côté de la base (1), au moyen d'un bouton (11) adapté pour coulisser à l'intérieur de la fente et y être verrouillé dans une position variable, de façon à obtenir ledit réglage de l'angle d'ouverture.

4. Boîte selon la revendication 1, dans laquelle :
- ledit tiroir (3) comprend une garniture en matériau à ergot (13), appliquée sur le fond dans la direction vers le couvercle, ledit matériau à ergot étant capable d'être moulé par pression sur ledit équipement électronique, faisant varier sa forme par compression pour s'ajuster aux contours dudit équipement ;
- ladite palette amovible (4) étant couverte sur un côté par un matériau à ergot (12), de sorte que, lorsque ladite palette est insérée dans le tiroir de façon à contrer le matériau à ergot de celle-ci avec celui du tiroir, et lorsque ladite boîte est fermée, ledit couvercle (2) exerce une pression sur la palette, de façon à exercer une pression sur ledit équipement, le conservant immobile.

5. Boîte selon la revendication 1, dans laquelle, lorsque ladite boîte est fermée et ladite palette est insérée dans le tiroir, le tiroir est fermé et verrouillé.

6. Boîte selon la revendication 1, comprenant une seconde fente (16) sur un côté de ladite base, et un bouton (17) adapté pour coulisser à l'intérieur de ladite fente, et pour être verrouillé dans une position variable, ledit bouton étant relié à un côté du tiroir en regard dudit côté de la base, obtenant un verrouillage dudit tiroir dans une position variable, soit fermée, soit ouverte, au degré souhaité d'ouverture partielle ou totale.

7. Boîte selon la revendication 1, comprenant un point d'attache (38) dans le fond de la base, adapté pour relier un support pour maintenir la boîte, ledit point d'attache comprenant un renforcement (39) par épaississement de la section dudit fond.

8. Boîte selon la revendication 1, dans laquelle lesdits base (1), couvercle (2), tiroir (3), palette (4), premier élément de retenue (6) et second élément de retenue (7) sont réalisés en bois.
